# EUROPÄISCHE PATENTSCHRIFT

(11) **EP 2 638 447 B1**
(45) Veröffentlichungstag und Bekanntmachung des Hinweises auf die Patenterteilung: **13.01.2016**
(21) Anmeldenummer: 11767937.3
(22) Anmeldetag: 11.10.2011
(51) Int. Cl.: G05D 23/19, F25D 17/00, B23Q 11/14

(54) **VORRICHTUNG ZUR EINSTELLUNG EINER INDIVIDUELLEN BETRIEBSTEMPERATUR VON MASCHINENELEMENTEN EINER BEARBEITUNGSMASCHINE**
DEVICE FOR ADJUSTING AN INDIVIDUAL OPERATING TEMPERATURE OF MACHINE ELEMENTS OF A MACHINE TOOL
DISPOSITIF DE RÉGLAGE D'UNE TEMPÉRATURE INDIVIDUELLE DE FONCTIONNEMENT DES COMPOSANTS D'UNE MACHINE-OUTIL

(30) Priorität: 12.11.2010 DE 102010051304
(43) Veröffentlichungstag der Anmeldung: 18.09.2013
(73) Patentinhaber: Hydac Cooling GmbH, 66280 Sulzbach/Saar (DE)
(72) Erfinder: KUNZ, Rudolf, 66482 Zweibrücken (DE)
(74) Vertreter: Bartels, Martin Erich Arthur
(86) Internationale Anmeldenummer: PCT/EP2011/005108
(87) Internationale Veröffentlichungsnummer: WO 2012/062394

(56) Entgegenhaltungen:
- WO-A1-2007/063441
- FR-A1- 2 667 537
- GB-A- 1 073 190
- JP-A- 61 109 645
- JP-A- 62 034 751
- US-A- 5 476 137
- US-B1- 6 212 895

## Beschreibung

Die Erfindung betrifft eine Vorrichtung zur Einstellung einer individuellen Betriebstemperatur von Maschinenelementen einer Bearbeitungsmaschinemit den Merkmalen im Oberbegriff von Anspruch 1.

Vorrichtungen zur Temperierung von Antrieben einer Werkzeugmaschine, wie z. B. Spindeln, bzw. zur Einstellung einer Betriebstemperatur einer Bearbeitungsmaschine, insbesondere einer Werkzeugmaschine sind bekannt. Solche Vorrichtungen werden beilspielsweise dazu angewandt, um ein Maschinenbett von Präzisionsdrehmaschinen oder Schleifmaschinen oder auch von Fräsmaschinen an die jeweilige Umgebungstemperatur des Aufstellungsorts einer derartigen Werkzeugmaschine exakt anzupassen. Zur Temperierung derartiger Maschinen oder Maschinenbette werden Temperiereinrichtungen mit einem flüssigen Temperiermittel, welches in einem Kreislaufsystem zirkuliert, angewandt. Die Temperatur des Temperierfluids ist dabei so gewählt, dass sich bei der betreffenden Werkzeugmaschine bzw. bei einem einzelnen Maschinenelement der Werkzeug- oder Bearbeitungsmaschine lediglich eine marginale Abweichung seiner Betriebstemperatur relativ zu der aktuellen Umgebungstemperatur einstellt. Derartige Vorrichtungen zur Einstellung einer Betriebstemperatur einer Werkzeugmaschine bzw. deren Maschinenelemente müssen zudem sicherstellen, dass während des Betriebs der Werkzeugmaschine Temperaturschwankungen der Werkzeugmaschine oder deren Bett vermieden sind.

Die EP 1 114 971 A2 zeigt und beschreibt eine Kühleinrichtung für eine Werkzeugmaschine mit einem Kreislaufsystem, in dem ein Kühlmedium zirkuliert, wobei das Kühlmedium einer Temperiereinrichtung der Werkzeugmaschine zugeführt ist, wobei dem Kreislaufsystem eine Dosiereinheit zugeordnet ist, mittels der externes Kühlmedium dem im Kreislaufsystem zirkulierenden Kühlmedium zudosierbar ist, und wobei die Dosiereinheit über einen Regler steuerbar ist. Das Kreislaufsystem für das Temperiermedium weist einen Puffertank auf, durch den das Kühlmedium geleitet ist. Die Temperatur des Temperier- oder Kühlmediums in dem Puffertank gibt hierbei eine gewünschte Betriebstemperatur der Werkzeugmaschine bzw. deren Maschinenelemente vor. Durch Zumischen von Temperiermedium in den Puffertank kann die Temperatur des Temperiermediums in dem Puffertank geändert werden. Das in den Puffertank zugemischte Kühlmedium oder Temperiermedium wird von einem Sekundärkreislauf mit einer Kühloder Heizeinrichtung abgezweigt. Eine Dosiereinheit, die über einen Regler steuerbar ist, dosiert hierbei Temperier- oder Kühlmittel in den Puffertank zu, so dass sich durch thermische Mischung die gewünschte Solltemperatur des Temperiermediums in dem Puffertank einstellt. Der Regler weist hierbei eine Regelschaltung auf, die die Differenztemperatur zwischen der Umgebung und dem Temperiermedium in dem Puffertank misst und in Abhängigkeit der Differenztemperatur die Dosiereinheit steuert.

Insbesondere bei sehr differentem Wärmeeintrag in einzelne Maschinenelemente einer derartigen Bearbeitungsmaschine oder Werkzeugmaschine sind die Vorrichtungen gemäß dem Stand der Technik zur Einstellung einer individuellen Betriebstemperatur einer Bearbeitungsmaschine in der Regel überfordert. Die bekannten Temperierkreise derartiger Werkzeugmaschinen oder Bearbeitungsmaschinen sind zum einen hysteresebehaftet und zum anderen insgesamt zu träge, so dass sich im tatsächlichen Betrieb einer derartigen Werkzeugmaschine unter Umständen Einbußen in der Maßhaltigkeit von mit Hilfe dieser Werkzeugmaschinen gefertigter Serienteile ergeben können. Zudem ist der Energieverbrauch der bekannten Temperiereinrichtungen nicht minimiert.

Die WO 2007/063441 A1 offenbart eine Vorrichtung zur Einstellung einer individuellen Betriebstemperatur von Maschinenelementen einer Bearbeitungsmaschine, wobei die Maschinenelemente in Parallelschaltung zueinander an einen ein Temperierfluid führenden Temperierkreis angeschlossen sind und wobei die Bearbeitungsmaschine eine Steuer- und/oder Regelungseinrichtung aufweist, die in Abhängigkeit von den beim Betrieb auftretenden Maschinerielemente-Ist-Temperaturen derart eine Mengeridosiereinheit für das Temperierfluid ansteuert, dass nach einer vorgebbaren Einstellzeit eine Maschinenelemente-Soll-Temperatur für jedes einzelne Maschinenelement erreicht ist, wobei die Mengendosiereinheit für jedes zu temperierende Maschinenelement eine Teildosiereinheit mit einstellbarem Fluidquerschnitt aufweist, die auf der Zulaufseite des jeweiligen Maschinenelementes im Temperierkreis angeordnet ist. Jede Mengendosiereinheit wird durch einen eigenen Temperatursensor geregelt.

Aus der US 6 242 895 B1 geht eine Temperiereinrichtung für eine Fabrikhalle hervor. Ausgehend von einem zentralen, außerhalb des Gebäudes gelegenen Wärmetauscher sind über entsprechende Rohrleitungen mehrere an einzelnen Maschinen vorgesehene Wärmetauscher vorgesehen, die jeweils eine sensorgesteuerte Dosiereinheit aufweisen. Im Rücklauf ist zudem ein zentrales Sperrventil vorgesehen.

Ausgehend von diesem Stand der Technik liegt der Erfindung die Aufgabe zugrunde, eine Vorrichtung zur Einstellung einer individuellen Betriebstemperatur von Maschinenelementen einer Bearbeitungsmaschine anzugeben, die bei einem insgesamt minimierten Energiebedarf in der Lage ist, jedes von ihr zu temperierende Maschinenelement der Bearbeitungsmaschine auf einer vorgebbaren Temperatur exakt zu halten.

Die Aufgabe wird mit einer Vorrichtung zur Einstellung einer individuellen Betriebstemperatur mit den Merkmalen des Patentanspruchs 1 in seiner Gesamtheit gelöst.

Bei der erfindungsgemäßen Vorrichtung ist vorgesehen, dass auf einer Ablaufseite des jeweils anzusteuernden Maschinenelementes ein vorgesteuertes Proportionalventil angeordnet ist, das zur Ansteuerung seines Ventilgliedes auf gegenüberliegenden Seiten in der Art einer Druckwaage an den Temperierkreis einmal eingangsseitig der zuordenbaren Teildosiereinheit angeschlossen ist und einmal ausgangsseitig nach dem zu temperierenden Maschinenelement angeschlossen ist. Die so gebildete Druckwaage ist hierbei Bestandteil der Mengendosiereinheit. Die genannte Maßnahme dient insbesondere dazu, einen stabilen Arbeitspunkt der betreffenden Teildosiereinheit für Temperierfluid zu erreichen.

Die Vorrichtung zur Einstellung einer individuellen Betriebstemperatur von Maschinenelementen einer Bearbeitungs- oder Werkzeugmaschine sieht einen, ein Temperierfluid führenden Temperierkreis vor, wobei alle innerhalb des Temperierkreises mit Temperierfluid zu versorgenden Maschinenelemente in Parallelschaltung zueinander angeordnet sind. Eine Steuerund/oder Regelungseinrichtung steuert hierbei eine Mengendosiereinheit für das Temperierfluid in Abhängigkeit von der beim Betrieb der Maschinenelemente individuell auftretenden Maschinenelemente-Ist-Temperatur. Hierbei wird Temperierfluid vorzugsweise mit gleicher Vorlauftemperatur, aber in Abhängigkeit von der aktuellen Maschinenelemente-Ist-Temperatur mit variablem Volumenstrom jedem betreffenden Maschinenelement zugeführt, mit dem Ziel, nach einer vorgebbaren und möglichst geringen Einstellzeit eine Maschinenelemente-Soll-Temperatur für jedes einzelne Maschinenelement zu erreichen. Durch die vorgeschlagene konstruktive Maßnahme der Zuordnung zumindest einer Mengendosiereinheit für jedes Maschinenelement der Bearbeitungsmaschine ist es ermöglicht, zum einen eine minimierte Vorlaufzeit bis zum Erreichen einer definierten Betriebstemperatur des betreffenden Maschinenelements zu erzielen und zum anderen rasch, und im geringsten Maße hysteresebehaftet, einen wechselnden Wärmeeintrag bei den betreffenden Maschinenelementen spezifisch abzuleiten. Ein wechselnder und spezifischer Wärmeeintrag bei den betreffenden Maschinenelementen ergibt sich sinnfällig aus deren Betrieb mit unterschiedlicher Leistung, wie etwa bei einer Spindel eines Antriebssystems einer spanabhebenden Werkzeugmaschine oder auch bei anderen Getriebebauteilen und Antriebseinheiten von Bearbeitungsmaschinen wie Wellen, Kugelrollspindeln, Linearantrieben, Torquernotoren und dergleichen mehr.

In einem besonders bevorzugten Ausführungsbeispiel der Vorrichtung zur Einstellung einer individuellen Betriebstemperatur von Werkzeugmaschinenelementen ist vorgesehen, dass für jedes zu temperierende Maschinenelement eine Teildosiereinheit der Mengendosiereinheit mit einstellbarem Fluidquerschnitt vorgesehen ist. Die betreffende Teildosiereinheit kann sowohl auf der Zulauf- als auch auf der Ablaufseite des jeweiligen Maschinenelementes im Temperierkreis angeordnet sein. Die jeweilige Teildosiereinheit kann durch ein Proportionalventil, eine Drossel mit einstellbarem Querschnitt oder aus einer Kombination dieser Bauteile eines Temperierkreises bestehen.

Es ist zweckmäßig, um den Einschwingvorgang bis zum Erreichen und Halten der gewünschten Maschinenelemente-Soll-Temperatur zu beschleunigen, eine die Temperatur des Temperierfluids im Vorlauf und im Nachlauf des betreffenden Maschinenelements analysierende Komparatorschaltung zu beschleunigen. Es kann ferner zweckmäßig sein, zur möglichst raschen Stabilisierung einer Maschinenelementetemperatur in der Steuer- und/oder Regelungseinrichtung einen PID-Regler einzusetzen oder auch Teile des betreffenden Reglers zu dem genannten Zweck einzusetzen. Der betreffende Regler steuert hierbei die jeweilige Teildosiereinheit bzw. deren einstellbaren Fluidquerschnitt an. Es versteht sich, dass bei umgebungstemperaturgeführten Maschinen dem Regler eine aktuelle Umgebungstemperatur des betreffenden Maschinenelements bzw. der gesamten Werkzeugmaschine oder Bearbeitungsmaschine zugeführt wird. Es kann auch zweckmäßig sein, der mit einem variablen Fluidquerschnitt versehenen Teildosiereinheit, wie etwa einer variablen Drossel, eine Drossel mit festem Öffnungsquerschnitt parallel zu schalten, so dass ein Mindestvolumenstrom sich durch das betreffende Maschinenelement ergibt.

Um einen Betrieb von einer Vielzahl von Maschinenelementen innerhalb des Temperierkreises zu ermöglichen, kann es zweckmäßig sein, den unter Umständen stark schwankenden Temperierfluid-Volumenströmen durch den Einsatz einer Förderpumpe mit variablem Fördervolumen für das Temperierfluid gerecht zu werden.

Um den Temperierfluid-Volumenstrom, welcher den Maschinenelementen oder anderer Verbraucher der Bearbeitungsmaschine wie etwa dem Maschinenbett zugeordnet ist, verändern zu können, kann es zudem zweckmäßig sein, zwischen der Ablaufseite und der Zulaufseite des Temperierkreises eine Bypasseinrichtung anzuordnen. Die Bypasseinrichtung kann beispielsweise durch ein stetig einstellbares Proportionalventil gebildet werden, dessen Ventilelement zumindest auf einer Ansteuerseite von der Steuer- und/oder Regelungseinrichtung ansteuerbar ist. Bei Öffnung der Bypasseinrichtung sinkt der Förderdruck der Pumpe und der Volumenstrom der Förderpumpe erhöht sich. Diese konstruktive Maßnahme ist insbesondere wirkungsvoll bei als Kreiselpumpen gebildeten Förderpumpen. Das Temperierfluid ist in einem besonders bevorzugten Ausführungsbeispiel der Vorrichtung ein Kühlmedium, beispielsweise ein Wasser-Glycol-Gemisch, das u.a. eine Minimierung der Korrosion der an den Temperierkreis angeschlossenen Maschinenelemente garantiert. Es versteht sich, dass zur strömungsmechanischen Auslegung des erfindungsgemäßen Temperierkreises die Maschinenelemente als Drosselstelle mit festem Öffnungsquerschnitt betrachtet werden können.

Im Folgenden wird die erfindungsgemäße Vorrichtung zur Einstellung einer individuellen Betriebstemperatur von Maschinenelementen anhand von Ausführungsbeispielen nach den Zeichnungen näher beschrieben. Dabei zeigt die
- Fig. 1: einen schematischen Schaltplan einer Vorrichtung zur Einstellung einer individuellen Betriebstemperatur von Maschinenelementen mit einer Temperierfluid-Versorgung der Maschinenelemente und mit einer Parallelschaltung einer festen und einer Drossel mit variablem Querschnitt;
- Fig. 2: ein weiteres Ausführungsbeispiel einer Vorrichtung zur Einstellung einer individuellen Betriebstemperatur von Maschinenelementen, wobei jede Teildosiereinheit für Temperierfluid von einer den Vor- und Nachlaufdruck an jedem Maschinenelement berücksichtigenden Komparatorschaltung angesteuert ist;
- Fig. 3: einen weiteren Schaltplan eines Ausführungsbeispiels einer Vorrichtung zur Einstellung einer individuellen Betriebstemperatur von Maschinenelementen, bei der im Ablauf eines jeden Maschinenelements eine Druckwaage eingebracht ist; und
- Fig. 4: einen Schaltplan eines Ausführungsbeispiels einer Vorrichtung zur Einstellung einer individuellen Betriebstemperatur von Maschinenelementen wie in Fig. 3, lediglich um eine Bypasseinrichtung zwischen dem Ablauf und dem Vorlauf des Temperierkreises erweitert.

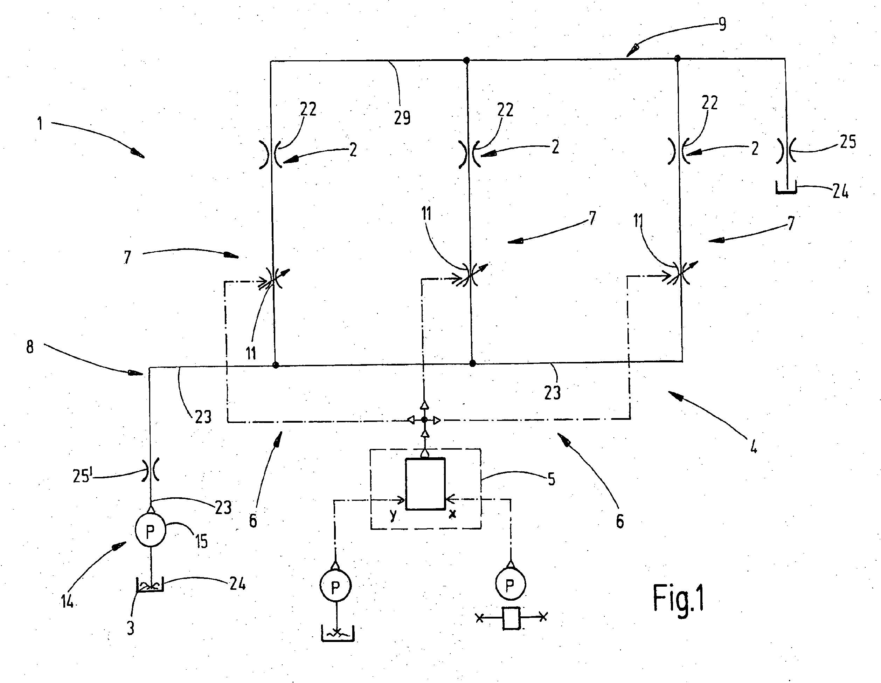

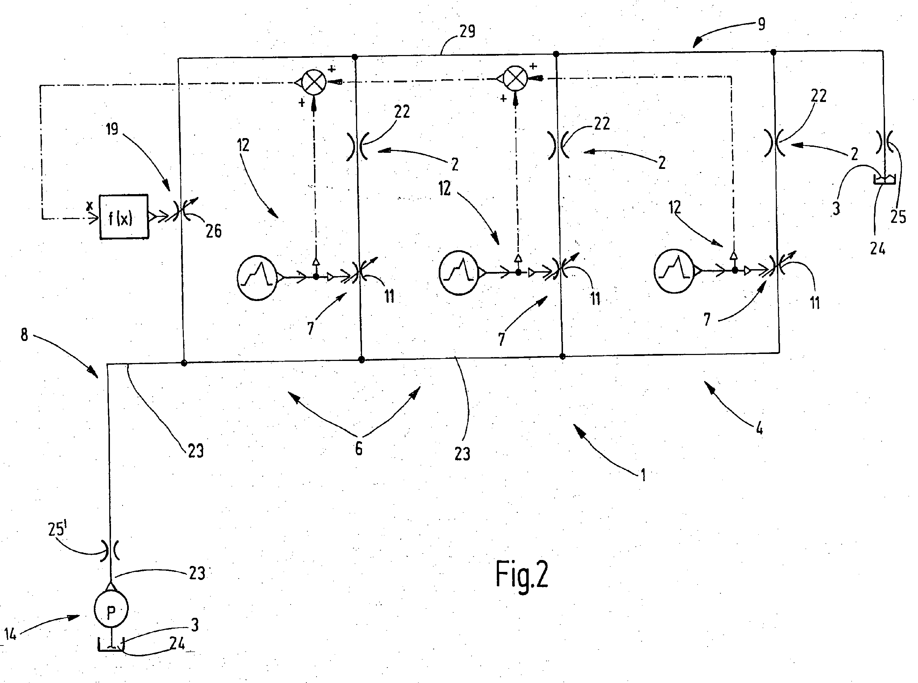

In Fig. 1 ist in einem schematischen hydraulischen Schaltplan eine insgesamt mit 1 bezeichnete Vorrichtung zur Einstellung einer individuellen Betriebstemperatur von drei Maschinenelementen 2 einer Bearbeitungsmaschine, hier einer Fräsmaschine, gezeigt. Die Maschinenelemente 2 wie etwa eine Spindel eines Vorschubs, ein antreibbares Werkzeug, oder eine Werkzeugaufnahme, wie beispielsweise ein Fräswerkzeug und dergleichen sind vereinfacht und symbolhaft als Drosselstellen 22 mit konstantem Querschnitt dargestellt. Zur Vermeidung von, beispielsweise durch Temperaturschwankungen in den betreffenden Maschinenelementen 2 hervorgerufenen Werkstücktoleranzen, weist, wie auch die in den Figuren 2 bis 4 dargestellten Vorrichtungen 1 zeigen, die Vorrichtung 1 in Fig. 1 einen Temperierkreis 4 zur Zufuhr und Abfuhr von Temperierfluid 3 zu jedem Maschinenelement 2 auf. Zu dem Temperierkreis 4 ist eine Steuer- und/oder Regelungseinrichtung 5 gehörig, die eine Mengendosiereinheit 6 aufweist, bestehend aus einer, jedem Maschinenelement 2 jeweils zugeordneten Teildosiereinheit 7, die in Abhängigkeit von gemessenen MaschinenelemeriteIst-Temperaturen entsprechend ansteuerbar ist. Die Ansteuerung der Teildosiereinheiten 7, die aus einer jeweils in einer Zulaufleitung 23 für Temperierfluid zu dem betreffenden Maschinenelement 2 eingebrachten verstellbaren Drossel 11 gebildet sind, erfolgt nach Maßgabe von gemessenen Temperaturen an dem jeweiligen betreffenden Maschinenelement 2. Zu der Steuer- und/oder Regelungseinrichtung 5, die in den Figuren 1 bis 4 gezeigt ist, ist zudem ein Kennfeldspeicher 13 gehörig, in dem insbesondere spezifische, für jede einstellbare Drossel 11 und deren zugeordnetem Maschinenelement 2 gehörige Algorithmen zur Veränderung des Drosselquerschnitts der Drossel 11 in Abhängigkeit der gemessen Ist-Temperatur, des Vorlaufdrucks des Temperierfluids 3 auf der Zulaufseite 8 des Temperierkreises 4 und eines gemessenen Volumenstromes auf der jeweiligen Ablaufseite jedes Maschinenelementes 2 abgespeichert sind.

Das Temperierfluid 3 wird in dem in Fig. 1 gezeigten Schaltplan der Vorrichtung 1 zur Einstellung einer individuellen Betriebstemperatur von in dem gezeigten Ausführungsbeispiel drei Maschinenelementen 2 einer Werkzeugmaschine von einer drehzahlgeregelten Förderpumpe 15 aus einem Tank 24 gespeist. Es kann auch zweckmäßig sein, die Druckversorgung 14 des Temperierkreises 4 durch eine Förderpumpe 15 mit variablen Fördervolumen vorzunehmen. Die in Fig. 1 dargestellte Vorrichtung 1 ist in der Lage, bei jedem, in den Temperierkreis 4 eingebrachten Maschinenelement 2 unter Berücksichtigung dessen spezifischer Wärmekapazität, dessen aktuellem Wärmeeintrag aufgrund spezifischer Bearbeitungsschritte an der Werkzeugmaschine, und unter Berücksichtigung der Umgebungstemperatur eines jeden Maschinenelements 2, eine rasche präzise Temperaturangleichung des jeweiligen Maschinenelements 2 an seine Umgebungstemperatur zu erzielen. Dadurch ergeben sich geringste Abweichungen von den konstruktiv vorgegebenen Toleranzen des jeweiligen Maschinenelements, verbunden mit der Möglichkeit der Einhaltung einer sehr hohen Maßhaltigkeit von Werkstücken, die mit einer Werkzeugmaschine mit der erfindungsgemäßen Vorrichtung 1 hergestellt sind. In Fig. 1 ist ein weitestgehend druckloser Ablauf des Temperierfluids 3 bzw. ein von dem Strömungswiderstand einer in die Ablaufseite 9 eingeknüpften Drossel 25 mit festem Querschnitt beeinflusster Ablauf des Temperierfluids 3 in den Tank 24 gezeigt.

Während in dem in Fig. 1 gezeigten Ausführungsbeispiel die Ansteuerung der jeweiligen Teildosiereinheiten 7 zentral vor der Steuer- und/oder Regelungseinrichtung 5 erfolgt, ist in dem in Fig. 2 gezeigten Ausführungsbeispiel einer Vorrichtung 1 jeder Teildosiereinheit 7 eine Komparatorschaltung 12 zugeordnet. Jede Komparatorschaltung 12 berücksichtigt hierbei neben der Maschinenelemente-Ist- und -Soll-Temperatur den Vorlaufdruck auf der Zulaufseite 8 und den Ablaufdruck auf der Ablaufseite 9 und steuert die als Drosseln 11 mit einstellbarem Querschnitt gebildeten Teildosiereinheiten 7 und deren spezifischen Temperierfluid-Volumenstrom an. Zusätzlich wird zur Volumenstrombeeinflussung auf der Zulaufseite 8 von den Komparatorschaltungen 12 eine Drossel 26 mit variablem Querschnitt in der Ablaufseite 9 in der Art eines Bypasses gebildet, angesteuert.

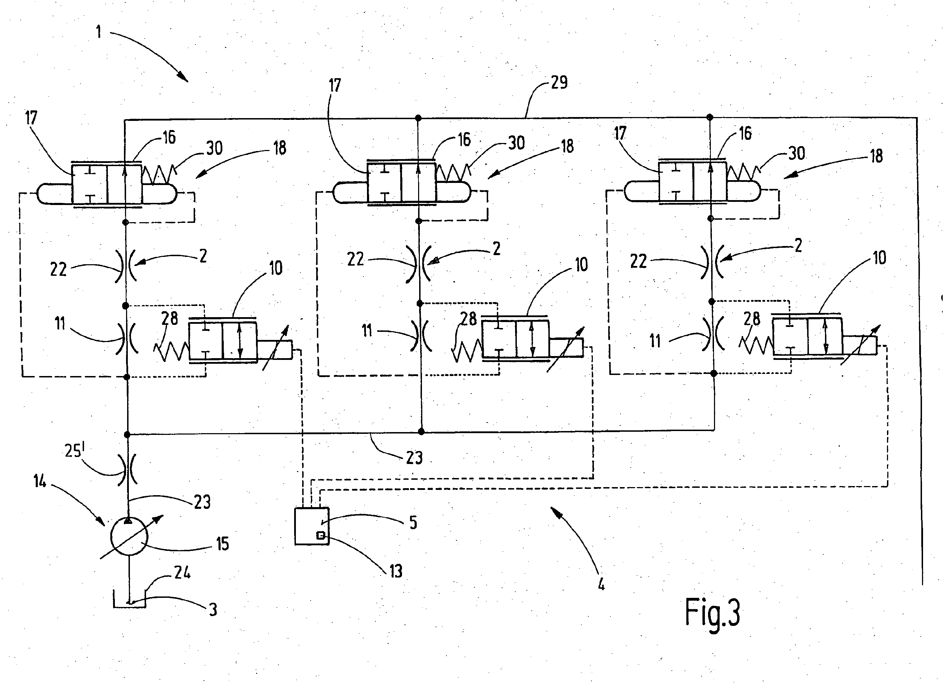

Die Druckversorgung 14 wird in dem in Fig. 2 gezeigten Ausführungsbeispiel von einer drehzahlgeregelten Förderpumpe bereitgestellt. Die Zulaufseite 8 der in Fig. 3 dargestellten Vorrichtung 1 ist in identischer Weise aufgebaut wie in den Ausführungsbeispielen in den Fig. 1 und 2 gezeigt. Stromauf der Drossel 25' zweigt sich eine Zulaufleitung 23 für Temperierfluid 3 zu den jeweiligen Teildosiereinheiten 7 auf, wobei die Teildosiereinheiten 7 jeweils identische Bauelemente aufweisen. Eingangsseitig jeder Teildosiereinheit 7 ist eine einstellbare Drossel 11, die mit einem als 2/2-Wegeventil gebildeten Proportionalventil 10 parallelgeschaltet ist, eingebracht. Das Proportionalventil 10 ist jeweils in seiner Sperrrichtung von einer Feder 28 vorgespannt, im Sinne eines Öffnens des Proportionalventils 10 ist dieses von der Steuer- und/oder Regelungseinrichtung 5 stetig verstellbar angesteuert. Stromauf der einstellbaren Drossel 11 ist in jeder Teildosiereinheit 7 das betreffende zu temperierende Maschinenelement 2 als Drosselstelle 22 dargestellt. Jedes Proportionalventil 10 bzw. jede einstellbare Drossel 11 wird hierbei singulär von der Steuer- und/oder Regelungseinrichtung 5 in der oben genannten Weise angesteuert.

Stromauf der Drosselstelle 22 bzw. der Verbraucher ist in die Ablaufseite 9 bzw. diese darstellende Ablaufleitungen 29 vor jedem Maschinenelement 2 ein vorgesteuertes Proportionalventil 16 mit einem Ventilglied 17 eingebracht. Die jeweils dargestellten Proportionalventile 16 sind hydraulisch vorgesteuert bzw. im Sinne ihrer Öffnen-Position von einer Feder 30 vorgespannt. Die hydraulische Vorsteuerung jedes Proportionalventils 16 erfolgt, indem dieses von dem Lastdruck jeweils vor dem Proportionalventil 16 im Sinne einer Sperrstellung des Ventilglieds 17 und in entgegengesetzter Richtung durch den Lastdruck stromauf der Drosselstelle 22 im Sinne einer Öffnen-Position des Ventilglieds 17 vorgesteuert ist. Die Proportionalventile 16 stellen somit Druckwaagen 18 dar. Die Druckwaagen 18 sind integraler Bestandteil der Mengendosiereinheit 6. Durch die in Fig. 3 gezeigte Vorrichtung 1 ist ein besonders rasches Anfahren einer gewünschten Maschinenelemente-Soll-Temperatur nach Betriebsbeginn der Werkzeugmaschine bewirkt.

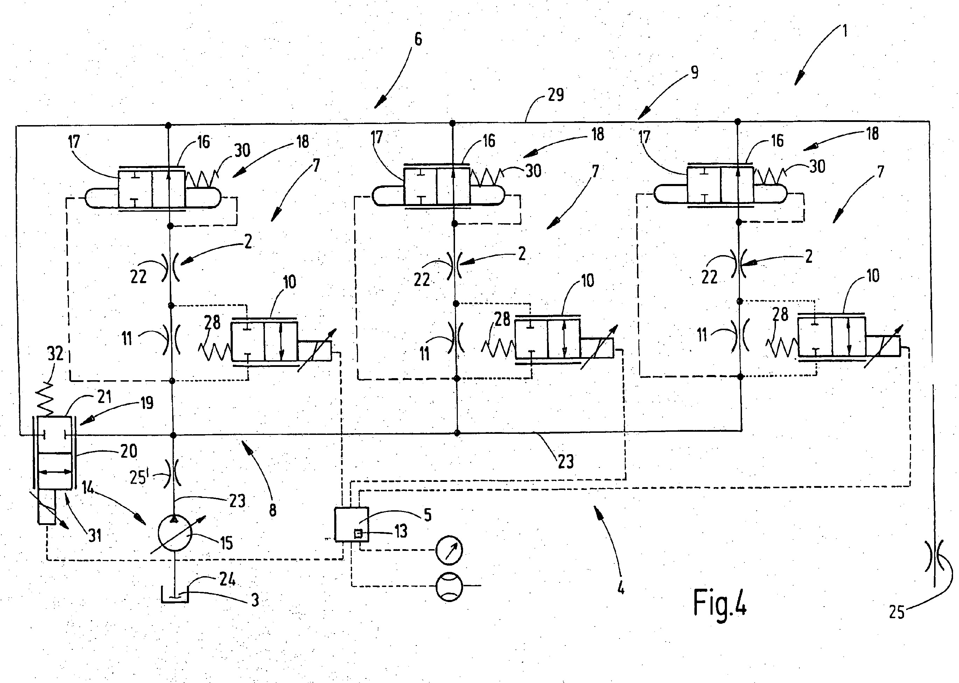

Um den zulaufseitigen Volumenstrom am Temperierfluid 3 in gewissem Sinne unabhängig von der Förderleistung der Förderpumpe 15 zu gestalten, zeigt die Fig. 4 eine dahingehende konstruktive Maßnahme. In der in Fig. 4 gezeigten Vorrichtung 1 ist zwischen der Ablaufseite 9 und der Zulaufseite 8 eine Bypasseinrichtung 19 eingebracht. Die Bypasseinrichtung 19 ist ein stetig verstellbares Proportionalventil 20, dessen Ventilelement 21 auf seiner Ansteuerseite 31 von der Steuer- und/oder Regelungseinrichtung 5 vorgesteuert ist. In entgegengesetzter Richtung ist das Ventilelement 21 durch eine Druckfeder 32 vorgespannt. Im unbestromten Zustand des Proportionalventils 20 ist dieses in einer Sperrstellung. Im Übrigen ist der Aufbau der in Fig. 4 gezeigten Vorrichtung 1 identisch mit der in Fig. 3 gezeigten Vorrichtung 1, so dass dieselben Bauteile dieselben Bezugszeichen aufweisen. Die in Fig. 4 gezeigte Vorrichtung 1 vermag durch das Proportionalventil 20 einen erhöhten Wirkungsgrad insgesamt darzustellen, so dass dieses eine besonders energiesparende Bauweise der Vorrichtung 1 erlaubt. Es versteht sich, dass in der Steuer- und/oder Regelungseinrichtung 5 geeignete Regler, insbesondere ein PID-Regler integriert ist. Lediglich beispielhaft seien hier typische Volumenströme durch die Verbraucher bzw. Drosselstellen 22 an Temperierfluid 3 angegeben, die beispielsweise einen durchschnittlichen Volumenstrom in einem ersten Verbraucher von 5 l/min in einem zweiten Verbraucher von 10 l/min und in einem dritten Verbraucher von etwa 20 l/min aufweisen können.

## Patentansprüche

1. Vorrichtung zur Einstellung einer individuellen Betriebstemperatur von Maschinenelementen (2) einer Bearbeitungsmaschine, wobei die Maschineneleimente (2) in Parallelschaltung zueinander an einen ein Temperierfluid (3) führenden Temperierkreis (4) angeschlossen sind und wobei die Bearbeitungsmaschine eine Steuer- und/oder Regelungseinrichtung (5) aufweist, die in Abhängigkeit von den beim Betrieb auftretenden Maschinenelemente-Ist-Temperaturen derart eine Mengendosiereinheit (6) für das Temperierfluid (3) ansteuert, dass nach einer vorgebbaren Einstellzeiteine Maschinenelemente-Soll-Temperatur für jedes einzelne Maschinenelement (2) erreicht ist, wobei die Mengendosiereinheit (6) für jedes zu temperierende Maschinenelement (2) eine Teildosiereinheit (7) mit einstellbarem Fluidquerschnitt aufweist, die auf der Zulaufseite des jeweiligen Maschinenelementes (2) im Temperierkreis (3) angeordnet ist, **dadurch gekennzeichnet, dass** auf einer Ablaufseite (9) des jeweils anzusteuernden Maschinenelementes (2) ein vorgesteuertes Proportionalventil (16) angeordnet ist, das zur Ansteuerung seines Ventilgliedes (17) auf gegenüberliegenden Seiten in der Art einer Druckwaage (18) an den Temperierkreis (4) einmal eingangsseitig der zuordenbaren Teildosiereinheit (7) angeschlossen ist und einmal ausgangsseitig nach dem zu temperierenden Maschinenelement (2) angeschlossen ist.

2. Vorrichtung nach Anspruch 1, **dadurch gekennzeichnet, dass** die jeweilige Teildosiereinheit (7) ein Proportionalventil (10), eine Drossel (11) mit einstellbarem Querschnitt oder eine Kombination dieser Bauteile ist.

3. Vorrichtung nach einem der vorhergehenden Ansprüche, **dadurch gekennzeichnet, dass** die Steuer- und/oder Regelungseinrichtung (5) eine Komparatorschaltung (12) aufweist oder PID-Regler einsetzt.

4. Vorrichtung nach einem der vorhergehenden Ansprüche, dadurch gekennzeichnen, dass der Temperierkreis (4) an eine Druckversorgung (14) angeschlossen ist, insbesondere in Form einer Förderpumpe (15) mit variablem Fördervolumen.

5. Vorrichtung nach einem der vorhergehenden Ansprüche, dadurch gekennzeichnen, dass die Druckwaage (18) Bestandteil der Mengendosiereinheit (7) ist.

6. Vorrichtung nach einem der vorhergehenden Ansprüche, **dadurch gekennzeichnet, dass** zwischen der Ablaufseite (9) und der Zulaufseite (8) der zu temperierenden Maschinenelemente (2) in der Art einer Rückführung eine Bypasseinrichtung (19) geschaltet ist.

7. Vorrichtung nach Anspruch 6, **dadurch gekennzeichnet, dass** die Bypasseinrichtung (19) ein stetig einstellbares Proportionalventil (10) aufweist, dessen Ventilelement (21) zumindest auf einer Ansteuerseite von der Steuer- und/oder Regelungseinrichtung (5) ansteuerbar ist.

8. Vorrichtung nach einem der vorhergehenden Ansprüche, **dadurch gekennzeichnet, dass** das Temperierfluid (3) ein Kühlmedium, insbesondere ein Wasser-Glycol-Gemisch, ist und dass das jeweilige Maschinenlement (2) einen Spindeltrieb aufweist, der modellhaft innerhalb des Temperierkreises (4) als Drosselstelle (22) mit festem Querschnitt betrachtet ist.

## Claims

1. A device for adjusting an individual operating temperature of machine elements (2) of a machine tool, the machine elements (2) being connected in parallel to each other to a temperature control circuit (4) conducting a temperature control fluid (3), and the machine tool comprising a control and/or regulation device (5) that actuates a quantity metering unit (6) for the temperature control fluid (3) dependently upon the actual machine element temperatures occurring during operation in such a manner that after a pre-determinable adjustment time a target machine element temperature is reached for each individual machine element (2), the quantity metering unit (6) having for each machine element (2) to be temperature-controlled a part-metering unit (7) with an adjustable fluid cross-section that is disposed on the inflow side of the respective machine element (2) in the temperature-control circuit (3), **characterised in that** there is disposed on a discharge side (9) of the respective machine element (2) to be actuated a pre-controlled proportional valve (16) that is connected on opposite sides in the manner of a pressure compensator (18) to the temperature control circuit (4), once on the input side of the assignable part-metering device (7), and once on the output side after the machine element (2) to be temperature-controlled, in order to actuate its valve component (17).

2. The device according to Claim 1, **characterised in that** the respective part-metering device (7) is a proportional valve (10), a throttle (11) with an adjustable cross-section or a combination of these components.

3. The device according to any of the preceding claims, **characterised in that** the control and/or regulation device (5) has a comparator circuit (12) or a PID regulator.

4. The device according to any of the preceding claims, **characterised in that** the temperature control circuit (4) is connected to a pressure supply (14), in particular in the form of a feed pump (15) with a variable feed volume.

5. The device according to any of the preceding claims, **characterised in that** the pressure compensator (18) is a component of the quantity metering unit (7).

6. The device according to any of the preceding claims, **characterised in that** a bypass device (19) is connected between the discharge side (9) and the inflow side (8) of the machine elements (2) to be temperature controlled (2) in the manner of a return.

7. The device according to Claim 6, **characterised in that** the bypass device (19) has a continuously adjustable proportional valve (10) the valve element of which (21) can be actuated at least on an actuation side of the control and/or regulation device (5).

8. The device according to any of the preceding claims, **characterised in that** the temperature control fluid (3) is a cooling agent, in particular a water/glycol mixture, and that the respective machine element (2) has a spindle drive that is considered like a model within the temperature control circuit (4) as a throttle point (22) with a fixed cross-section.

## Revendications

1. Dispositif de réglage d'une température individuelle de fonctionnement d'éléments (2) d'une machine d'usinage, les éléments (2) de la machine étant raccordés suivant un montage en parallèle les uns avec les autres à un circuit (4) de mise en température conduisant un fluide (3) de mise en température et la machine d'usinage ayant un dispositif (5) de commande et/ou de régulation, qui, en fonction des températures réelles des éléments de la machine se produisant en fonctionnement, commande une unité (6) de dosage de quantité du fluide (3) de mise en température, de manière à obtenir, après un temps de réglage pouvant être donné à l'avance, une température de consigne des éléments de la machine pour chaque élément (2) individuel de la machine, l'unité (6) de dosage de quantité ayant, pour chaque élément (2) de la machine à mettre en température, une unité (7) partielle de dosage, dont la section transversale pour le fluide peut être réglée et qui est montée dans le circuit (3) de mise en température du côté de l'arrivée à l'élément (2) respectif de la machine, **caractérisé en ce que**, d'un côté (9) d'évacuation de l'élément (2) de la machine à commander, est montée une vanne (16) proportionnelle pilotée, qui, pour la commande de son obturateur (7), est raccordée sur des côtés opposés à la manière d'une balance (18) manométrique au circuit (4) de mise en température une fois du côté de l'entrée de l'unité (7) partielle de dosage pouvant être associée et une fois du côté de la sortie après l'élément (2) de machine à mettre en température.

2. Dispositif suivant la revendication 1, **caractérisé en ce que** l'unité (7) partielle de dosage respective est une vanne (10) proportionnelle, un étranglement (11) de section transversale réglable ou une combinaison de ces pièces.

3. Dispositif suivant l'une des revendications précédentes, **caractérisé en ce que** le dispositif (5) de commande et/ou de régulation a un circuit (12) comparateur ou utilise un régleur PID.

4. Dispositif suivant l'une des revendications précédentes, **caractérisé en ce que** le circuit (4) de mise en température est raccordé à une alimentation (14) en pression, notamment sous la forme d'une pompe (15) refoulante à volume véhiculé variable.

5. Dispositif suivant l'une des revendications précédentes, **caractérisé en ce que** la balance (18) manométrique fait partie de l'unité (7) de dosage de quantité.

6. Dispositif suivant l'une des revendications précédentes, **caractérisé en ce qu'**un dispositif (19) de dérivation est monté à la manière d'un recyclage entre le côté (9) d'évacuation et le côté (8) d'arrivée des éléments (2) de machine à mettre en température.

7. Dispositif suivant la revendication 6, **caractérisé en ce que** le dispositif (19) de dérivation a une vanne (10) proportionnelle réglage constamment, dont l'obturateur (21) peut, au moins d'un côté de commande, être commandé par le dispositif (5) de commande et/ou de régulation.

8. Dispositif suivant l'une des revendications précédentes, **caractérisé en ce que** le fluide (3) de mise en température est un milieu de refroidissement, notamment un mélange d'eau et de glycol, et **en ce que** l'élément (2) de machine respectif a une transmission à broche, qui, comme modèle au sein du circuit (4) de mise en température, est considérée comme un point (22) d'étranglement de section transversale fixe.
